Europäisches Patentamt

European Patent Office

Office européen des brevets

(11) Publication number: **0 180 480**
**A2**

(12) ## EUROPEAN PATENT APPLICATION

(21) Application number: **85307913.5**

(22) Date of filing: **31.10.85**

(51) Int. Cl.⁴: **H 01 S 3/03**, H 01 S 3/097

(30) Priority: **31.10.84 GB 8427549**

(71) Applicant: **JEC Lasers Inc., 59 North Fifth Street, Saddle Brook New Jersey 0766 (US)**

(43) Date of publication of application: **07.05.86 Bulletin 86/19**

(72) Inventor: **Harry, John Ernest, Greenlands 22 Knossington Road Braunston, Oakham Leicestershire (GB)**
Inventor: **Evans, David Ralph, 207 Hermitage Road, Loughborough Leicestershire LE11 0PD (GB)**

(74) Representative: **Bardo, Julian Eason et al, Abel & Imray Northumberland House 303-306 High Holborn, London, WC1V 7LH (GB)**

(84) Designated Contracting States: **DE FR GB IT**

(54) **Gas lasers.**

㊿ A gas laser includes a laser cavity (21) and electrodes (5, 6) defining an electric discharge path in the cavity. The electrodes include an anode (5) having a porous surface and gas is injected into the cavity (21) through the porous surface of the anode. Further gas inlets (22) are provided adjacent the anodes (5).

The laser head can be mechanically separated from gas flow generation means for generating a gas flow through the laser cavity.

Gas Lasers

This invention relates to gas lasers.

One of the objects commonly applicable in the design of a gas laser is that of achieving with reliability the maximum power output from a given physical size of laser. Another consideration is the efficiency of the laser.

In a typical high power gas laser, a reflective and partially reflective mirror define an optical path within the laser cavity. A glow discharge is generated in the laser cavity between electrodes to provide plasma in the cavity and the gas is circulated around a closed path which incorporates the laser cavity. The glow discharge that is generated may be approximately aligned with the optical axis in the cavity as in an axial flow laser or it may be transverse to the optical axis as in a transverse-discharge laser. Furthermore, the discharge may be generated from an alternating voltage source or from a pulsed direct voltage source to provide an intermittent discharge as in a pulsed laser or the discharge may be generated from a direct voltage source to provide a continuous laser output.

In the February 1970 issue of the IEEE Journal of Quantum Electronics a transverse-discharge gas laser is described in which discharges are generated between a plurality of anodes and cathodes, the discharges extending perpendicular to the optical axis of the laser. The discharges generated between respective electrodes are spaced apart from one another sufficiently to prevent coalescing of the discharges. In order to improve the laser gain  gas is injected through the anodes and removed through the cathodes. The anodes and cathodes are in the form of open ended tubes.

As the power of a gas laser is increased, so the physical size of the laser is also necessarily increased with the result that high power gas lasers (for example lasers producing an output of at least 1kW) are bulky devices. While the optical cavity may itself be relatively small, the gas circulation system which has to circulate a relatively large volume of gas through the laser cavity at low pressure, is bulky and is integrally coupled with the laser head. Consequently such high power lasers have not been readily portable and their output has either been at a fixed location and in a fixed direction or has been movable only by deflection by optical means.

It is an object of the invention to provide an improved form of gas laser.

According to a first aspect of the invention there is provided a gas laser including a laser cavity and electrodes defining an electric discharge path in the cavity, wherein the electrodes include an anode having a porous surface and gas supply means are

0180480

- 3 -

provided for injecting gas into the cavity through the porous surface of the anode.

We have found that a most surprising increase in the output power of a laser can be achieved by providing the anode with a porous surface. We have also found that such an increase in output power is not achieved simply by providing a single hole in the end of the anode. At least part of the advantage of providing a porous anode is that it enables gas injected through the anode to act absolutely at the root of the discharge. If only a single hole is provided in the anode then substantial areas of the anode spaced from that hole remain and it is therefore possible for the root of the discharge to move slightly away from the gas flow through the anode. Thus the anode must have a multiplicity of apertures and is described as "porous". It will be appreciated from what has been said that the pores in the porous surface may occupy an area greater, the same or less than the remaining parts of the surface. In one example to be described later, the substitution of porous anodes for conventional electrodes together with the provision of a suitable gas flow through the anodes enabled the power of the laser to be considerably increased.

Preferably the whole effective surface of the anode is porous. In this case the advantage of porosity is provided for the whole operative part of the anode and it is impossible for the root of the discharge to escape the influence of gas injected through the anode. By "effective surface" is meant that part of the anode which is exposed, which is electrically connected to a power supply circuit and which therefore provides a suitable surface for attachment of the electric discharge.

Preferably the effective surface of the anode is at its tip and exterior side walls of the anode are electrically insulated from the tip. In this way the root of the discharge is confined to the tip of the anode.

Preferably the effective surface of the anode is devoid of any edges, substantial bends or curvature, and most preferably is flat. Furthermore the effective surface is preferably in a plane substantially perpendicular to the discharge path extending therefrom in the region of the anode. Both of these features assist in promoting a uniform high volume discharge.

Preferably the anode is defined by a tubular member, which may be of circular cross-section projecting into the chamber, the exterior of the tubular portion projecting into the chamber being electrically insulating but the tubular member having an electrically conducting porous end wall in the chamber. The end wall is preferably recessed within the tubular member, the walls of the recess apart from the end wall being electrically insulated. The gas supply means may be connected to the other end of the tubular member and an electrical connection made to the end wall also by connection to the other end of the tubular member, another part of the tubular member being electrically conducting along its length.

Preferably a plurality of such porous anodes are provided and the gas supply means is arranged to inject gas into the cavity through the porous surface of each such anode. The provision of a plurality of anodes promotes the creation of a uniform high volume discharge and increases the total discharge current that can be used.

The tips of the anodes are preferably arranged to lie in a common plane perpendicular to the axis of the laser cavity and preferably equiangularly spaced around the axis of the laser cavity.

While it is possible to provide a common cathode for all the anodes, it is preferable to provide a plurality of cathodes. One cathode may be associated with more than one anode. This provides better control of the cathode roots of the discharges and improves utilisation of the cavity in the cathode region.

In addition to providing a porous anode, it may be preferable to provide at least one gas inlet adjacent the anode, the gas supply means being arranged to inject gas into the cavity through the gas inlet. Whereas, as explained above, it is necessary for the end surface of the anode to be porous rather than to have a simple opening and therefore some obstruction to gas flow is necessarily created, this does not apply to the gas inlet. Thus the volume flow rate of gas injected into the discharge region can be considerably increased over that injected through the anode or anodes alone by providing said at least one gas inlet. Preferably a plurality of gas inlets are provided adjacent respective anodes and the gas supply means are arranged for injecting the gas into the cavity through the gas inlets.

The invention is particularly applicable to a laser in which the optical path in the laser cavity is substantially aligned with the electrical discharge path defined by the electrodes. Nonetheless the invention may be used in a transverse-discharge laser.

The laser may be a $CO_2$ gas laser.

The invention may be applied to a laser having a pulsed laser output or one having a continuous laser output and is of particular advantage in the latter case. It should be understood however that where reference is made to a laser having a continuous output that should not be taken to imply that the output is sustained for a prolonged period of time. Each pulse of a pulsed output is likely to last only for a very small fraction of a second whereas a "continuous" output could be expected to last for a second or longer.

According to a second aspect of the invention there is provided a high power gas laser including a laser head having a chamber providing a laser cavity and electrodes defining an electric discharge path in the chamber, power supply means for connection to the electrodes, and gas flow generation means for generating a gas flow through the laser cavity, wherein the gas flow generation means is mechanically separated from the laser head and connected thereto by at least one gas conduit.

The mechanical separation of the gas flow generation means from the laser head enables the laser head to be made portable if desired and also enables vibrations caused by the gas flow generation means to be prevented from reaching the laser head and vibrating the optical elements of the laser. Preferably, said at least one gas conduit is a flexible coupling permitting relative movement of the gas flow generating means and the laser head. In such a case it is possible to move the laser head to adjust the position and direction of its output and for example to mount the laser head on a robot arm.

The electrodes preferably include a hollow anode having a surface with at least one opening therein and the gas flow generation means is preferably arranged to generate a gas flow into the chamber through said at least one opening. The hollow anode preferably has a porous surface.

The gas flow generation means may be arranged to circulate gas in a closed path which incorporates the chamber of the laser head. An alternative arrangement is to have an open circuit flow of gas and, if the laser is to operate only for short periods of time, even to have no means for extracting gas from the chamber of the laser.

According to a third aspect of the invention there is provided a gas laser including a laser cavity and an electric discharge path in the cavity defined by at least one anode and at least one cathode, wherein a gas inlet is provided adjacent said at least one anode and gas supply means are provided for injecting gas into the cavity through the gas inlet.

The gas inlet is preferably directed towards said at least one cathode.

A plurality of anodes are preferably provided. Preferably the or each anode is porous and the gas supply means are arranged to inject gas into the cavity also through the or each anode.

According to the first aspect of the invention there is also provided a method of operating a gas laser including a laser cavity and electrodes defining an electric discharge path in the cavity, wherein the electrodes include an anode having a porous surface and gas is injected into the cavity through the porous surface of the anode.

The gas may be injected at a pressure of at least 13kPa and at a temperature lower than that in the laser cavity and preferably below room temperature.

According to the third aspect of the invention there is also provided a method of operating a gas laser including a laser cavity and an electric discharge path in the cavity defined by at least one anode and at least one cathode, wherein gas is injected into the cavity through a gas inlet adjacent said at least one anode.

By way of example, embodiments of the invention will now be described with reference to the accompanying drawings, of which:

Fig. 1 is a schematic sectional plan view of a first experimental prototype of a laser,

Fig. 2 is a sectional side view of an anode of the laser shown in Fig. 1,

Fig. 3 is a schematic sectional plan view of a laser head of a second prototype laser,

Fig. 4 is a diagrammatic view along the lines IV-IV of Fig. 3,

Fig. 5 is a sectional view along the lines V-V of Fig. 4, and

Fig. 6 is a block diagram showing the overall arrangement of a laser incorporating the laser head of Figs. 3 to 5.

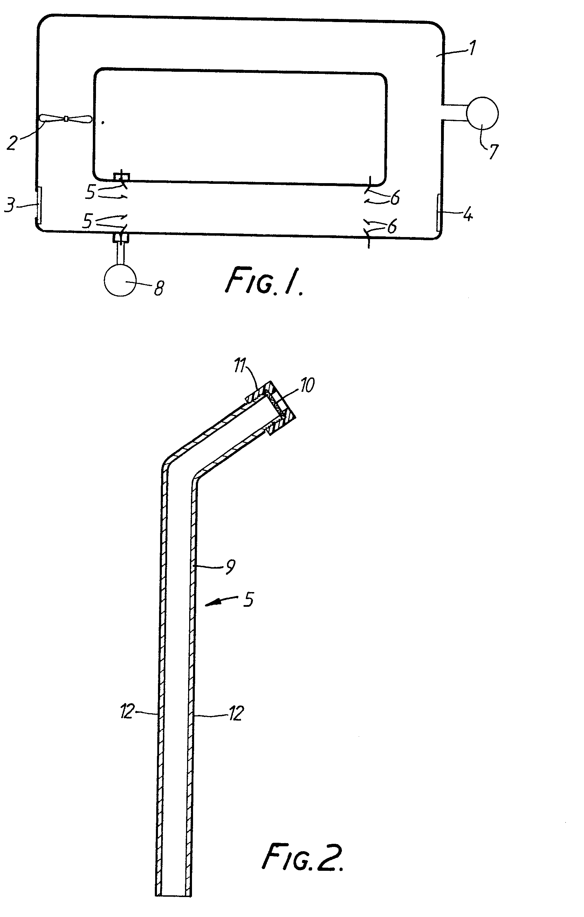

Referring first to Fig. 1, there is shown a gas laser having an annular duct 1 of circular cross-section defining a gas circulation path, a fan or pump 2 for circulating gas around the path, a front mirror/window 3, a rear mirror 4 and an electric discharge arrangement comprising six anodes 5 and six cathodes 6 (four anodes and four cathodes being visible in Fig. 1) located in the duct 1 between the mirrors 3 and 4. Each of the anodes is associated with a respective cathode axially aligned therewith and the anodes and cathodes are connected in an electrical circuit which may be of the kind described in British patent application No. 2095490A or British patent No. 2095491, the disclosures of which are incorporated herein by reference, and which will not be described further here. The duct 1 is connected to a vacuum pump 7 to reduce the pressure in the duct to a selected value in the range of 0.7kPa to 6kPa, and the anodes 5 are connected to a gas supply means 8 as will be described more fully below.

The structure of the six anodes 5 are all identical and one is shown in Fig. 2. Each anode is made from a length of copper tubing 9 of circular cross-section which is bent towards one end and over the bent end of which an electrode in the form of a fine mesh metal filter 10 is located, being secured in place by a screw threaded cap 11 made of insulating material which locates the filter in a recessed position at the end of the anode. The exterior of the tubing 9 is insulated, in this example, by a layer 12 of $Al_2O_3$ sprayed onto the exterior of the tubing 9.

The anodes 5 are equiangularly spaced around the duct 1 with the bent portions of the anodes inclined to the axis of the duct and with the tips of the anodes lying in a common plane perpendicular to the axis of the duct. Thus the effective surface of each anode is defined by the area of the filter 10 not covered by the cap 11 and this surface is inclined at about 45 degrees to the axis of the duct.

The stem portion of the tubing 9 of each electrode passes through the wall of the duct 1 and terminates just outside the duct, enabling the open end of the tubing to be connected to the gas supply means 8.

In operation electrical connections are made to the anodes and cathodes, electric glow discharges are generated between each anode/cathode pair and gas is passed down each anode and passes through the filter 10 into the duct 1 which in this region forms part of the laser cavity. It is found that by passing gas through the anodes the power of the laser is increased substantially.

In one particular example of the embodiment of Figs. 1 and 2 each of the anodes had a bent portion of 30mm length and a stem portion of 100mm length, the diameter of the exposed area of filter 10 which was made of stainless steel was 5mm, the filter had holes of diameter 0.005ins (about 0.13mm) spaced apart from one another by 0.010ins (about 0.25mm) in a hexagonal array, and the separation of the cathodes and anodes (the active or excited length of the laser) was 0.5m. The gas which circulated in the duct 1 was a mixture by volume of 4.5% $CO_2$, 13.5% $N_2$, 82% He and was circulated at a rate of 2250 $1/s^{-1}$ with the pressure in the duct at 1.3kPa. Without supplying gas through the anodes the power output obtained from the laser was 170W but when the same mixture of gas as was circulating in the duct 1 was passed from a supply through the anodes at a temperature of about $15^{o}C$, at a rate of 1.8 $1/s^{-1}$ per anode and at a pressure of 350kPa, the power output increased to 1050W. When the fan 2 was turned off a power output of 840W was achieved with a gas flow rate of 1.8 1/s at 350kPa at each anode.

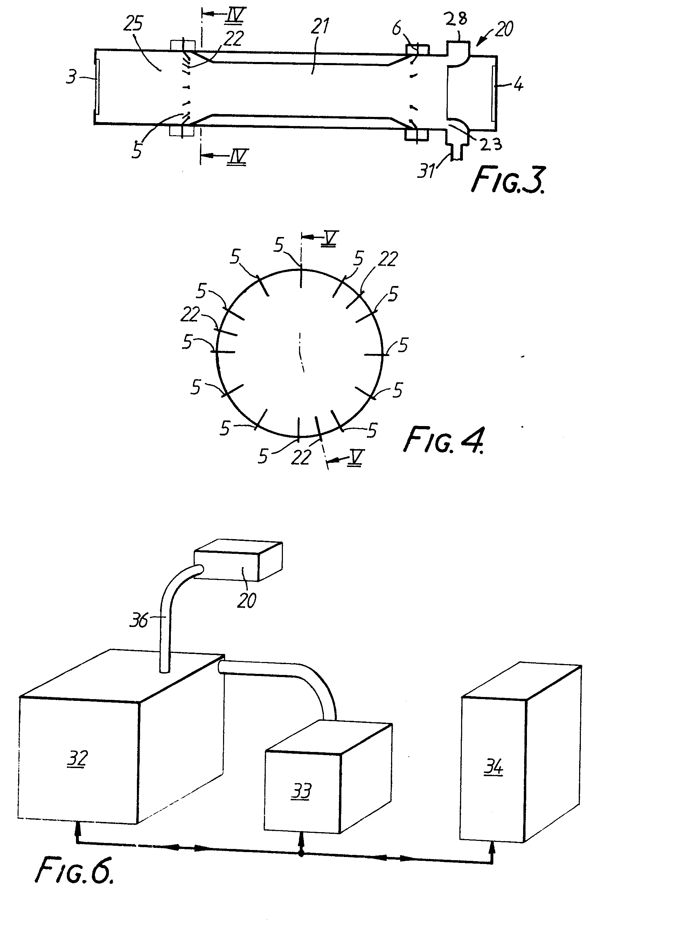

Referring now to Figs. 3 to 5, there is shown a laser head 20 without an endless duct 1. In Figs. 3 to 5 parts corresponding to those shown in Figs. 1 and 2 are designated by the same reference numerals.

The laser head 20 has a chamber 25 defining a laser cavity 21 of circular cross-section, a front mirror/window 3, a rear mirror 4, an electric discharge arrangement comprising a set of anodes 5 and a set of cathodes 6, a set of gas inlets 22 associated with the anodes 5, and a gas outlet 23. Twelve anodes 5 are provided equiangularly spaced around the cavity 21 and three gas inlets 22 are provided also equiangularly spaced around the cavity 21, each gas inlet 22 being located midway between adjacent anodes 5. Fig. 4 shows purely diagrammatically the positioning of the anodes 5 and the gas inlets 22. Six cathodes 6 are provided equiangularly spaced around the cavity 21 and each of the anodes and cathodes is connected through a respective ballasting impedance (not shown) to a power supply (not shown in Figs. 3 to 5) so that stable coalescing electric discharges may be generated between the anodes and cathodes as disclosed in more detail in British patent application No. 2095490A or British patent No. 2095491.

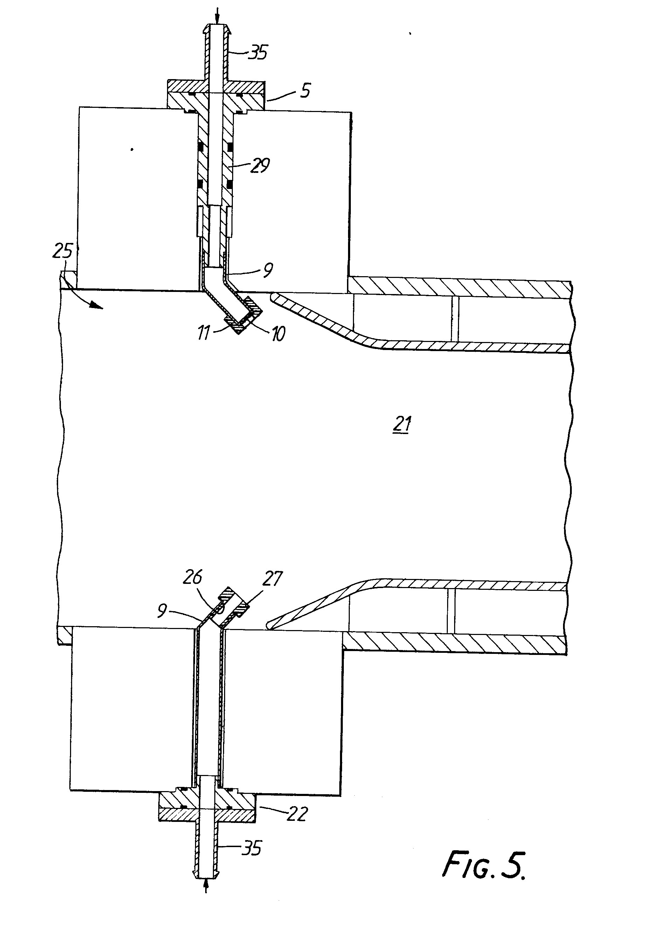

Referring now particularly to Fig. 5, the structure of each of the anodes 5 is similar, but not identical to, that described above with reference to Fig. 2 being made from a length of copper tubing 9 secured to a brass component 29 of circular cross-section having an axial passageway therethrough. The tubing 9 is of circular cross-section and has a bent end over which a fine mesh element 10 is located, being held in place by a screw threaded cap 11 made of insulating material which locates the filter in a recessed position at the end of the anode. The exterior of the tubing 9, which projects into the chamber 25, is insulated by a layer of insulating material sprayed onto the exterior of the tubing 9.

The optical path of the laser corresponds to the diameter of the laser cavity 21 along its central region between the mirrors 3, 4 and the whole of the cross-sectional area of the cavity is employed. The anodes 5 and cathodes 6, while they project into the chamber 25, do not intrude into the laser cavity 21 and the optical path between the mirrors 3, 4 as the diameter of the chamber 25 is enlarged in the region of the anodes 5 and cathodes 6. The tips of the anodes 5 are inclined to the longitudinal axis of the laser so that discharges extend inwardly from the anodes and therefore reach the central axis of the cavity at a position close to the anodes so that the laser gain on the central axis is maintained for a greater part of the length of the laser cavity and there is only a small conical volume of short axial length extending from the anodes where the gain is significantly reduced.

The structure of each gas inlet 22 is the same and an example of one such inlet is shown in Fig. 5. It will be seen that the inlet is in similar form to the anode 5 shown in Fig. 2 except that no fine mesh element 10 is provided and of course no electrical connection is made to the inlet. The inlet 22 is made from a length of copper tubing 9 of circular cross-section which is bent towards one end and on the bent end of which a cap 27 made of insulating material is mounted, the cap having an inner sleeve 26 which extends down the interior of the copper tubing 9. As with each anode 5, that part of the tubing 9 that projects into the chamber 25 is insulated, either by a layer of insulating material sprayed onto the exterior of the tubing 9 or by a plastic coating heat shrunk onto the tubing 9. The insulation of the inlets 22 avoids them providing an earth connection for discharges from the anodes 5.

The cathodes 6 are also located in a part of the chamber 25 that is of enlarged diameter and consequently they do not intrude into the laser cavity 21. The gas outlet 23 is provided on the opposite side of the cathodes 6 to the anodes 5 and is an annular outlet around the whole of the cavity 21. The annular outlet is defined by a manifold 28 which has an outlet 31 for connection to a gas recirculating system as will be described more fully below with reference to Fig. 5.

Fig. 6 shows schematically how the laser head 20 of Figs. 3 to 5 is connected to other important component parts of the laser, namely a gas recirculating system 32, a power supply system 33 and a control cubicle 34. Each of the anodes and cathodes is provided with a flexible electrical connection to the power supply system 33 which includes the respective stabilizing impedances for each electrode referred to above. The electrical connections pass via the gas recirculating system 32 through an umbilical cord 36 to the laser head 20. Each of the anodes 5 is also connected via a flexible conduit to a gas outlet of the gas recirculating system 32 and similarly each of the gas inlets 22 is connected via a flexible conduit to a gas outlet of the system 32. The flexible conduits also pass through the umbilical cord 36 and are connected to connecting portions 35 of the anodes 5 and inlets 22. The anodes and gas inlets may share one or more flexible conduits. Finally, the outlet 31 of the manifold 28 is connected to the inlet of the gas recirculating system 32 via one or more flexible conduits in the umbilical cord 36. The details of the construction of the gas recirculating system is not a part of the present invention and will not be described further here. The system may be constructed from conventional components including for example a heat exchanger, vacuum pump, compressor, filter and gas reconstituor in a manner that will be understood without further explanation by those skilled in the art.

The operation of the gas recirculating system and the power supply is controlled from the control cubicle 34.

In operation, electric glow discharges are generated between the anodes and cathodes and gas is injected into the laser cavity through each of the inlets 22 and each of the anodes 5, and removed from the laser cavity through the outlet 8.

In one particular example of the embodiment of Figs. 3 to 6 the diameter of the central part of the laser cavity 21 was 93mm and this was also the diameter of the laser beam (prior to any focussing), the diameter of the enlarged portions of the chamber 25 was 136mm, the internal diameter of each of the gas inlets 22 was 5mm, the diameter of the exposed part (effective surface) of the fine mesh element 10 of each anode was 6.5mm, the mesh element 10 had a thickness of 0.127mm, a hole size of 0.152mm, a centre-to-centre hole spacing of 0.279mm and the holes were arranged in a hexagonal array. The cathodes were solid copper cathodes each with a surface area of $6000mm^2$. The spacing of the anodes from the cathodes was 0.6m.

In operation with a stabilizing impedance of 10kΩ connected to each cathode and a stabilizing impedance of 30kΩ connected to each anode and with a discharge voltage of 9kV, a total discharge current of 1.6A was obtained giving a total discharge power of 14.5kW. A gas mixture comprising, by volume, 82% He, 13.5% $N_2$ and 4.5% $CO_2$ was injected through the anodes 5 and gas inlets 22. The total flow rate through the anodes was 125 std $m^3$/hr and the same total flow rate was injected through the inlets 22 giving a total flow rate of 250 std $m^3$/hr. The pressure in the laser cavity was maintained at 4.65kPa. With such an arrangement a power output of 3kW at a wavelength of 10.6 µm was obtained. Thus the specific laser output was 740 W/litre, the output power per meter of discharge was 5 kW/m and the efficiency of the laser was about 20 per cent.

In the case of the arrangement described above the overall dimensions of the laser head may be 1000mm X 400mm X 400mm, and may have a weight of 50kg. Thus the laser head may be fairly easily manoeuvred and can be mounted on a robot arm if desired. The gas recirculating system 32 may be in a module the overall dimensons of which are 2000mm X 2000mm X1600mm, the power supply system may be in a module the overall dimensions of which are 900mm X 1200mm X 1300mm, and the control cubicle may have overall dimesions of 2200mm X 1000mm X 1000mm. While these modules are of course interconnected they can be designed and manufactured separately from one another, which makes the manufacture of the laser relatively straightforward and inexpensive.

The reasons why the embodiments described above have such an increased power output is believed to be because (1) the arrangements inhibit the transition of a glow discharge (which is desired for a laser) to an arc discharge and also (2) provide a more uniform distribution of excited species throughout the laser cavity.

With regard to (1) above, it is believed that glow to arc transition of a discharge between electrodes is dependent upon both factors relating to the electrodes and the region immediately surrounding them (electrode phenomena) and factors relating to the body of gas between the electrodes through which the discharge passes (column phenomena). In general if a glow to arc transition occurs in any part of a discharge then the whole discharge will rapidly take on the characteristics of an arc; in the embodiments of the invention, however, it is found that this is not necessarily the case. If the velocity of gas is sufficiently high arcs will be swept away as they are formed before a stable arc is developed. By injecting gas in the immediate vicinity of the anode a particularly high gas velocity for a given overall flow rate can be obtained in this region and some local arcing can be tolerated while still maintaining a laser output of reasonable power. Thus the laser is able to provide a high power output that is reliable. Furthermore by injecting gas through a porous electrode constriction of the anode root on the electrode surface is inhibited and thus the glow to arc transition also inhibited.

The gas flow arrangement of the embodiments described and also the electrode configurations enhance the uniformity of the distribution of excited species throughout the laser cavity.

It will be understood that the embodiments describe a number of techniques by which laser output power may be increased, including for example the use of a porous anode and the use of a gas inlet adjacent the anode. While in preferred arrangements of the invention both these techniques are used together it is within the scope of the invention to use only one or the other. Also, while in the embodiments described, a plurality of anodes and cathodes are provided and this is believed to be advantageous in a high power gas laser as already described, it is within the scope of the invention to have a single anode and cathode. If desired the gas may be extracted through the cathodes instead of or in addition to the gas outlet 23.

In the embodiments described the gas is recirculated. It is however within the scope of the invention to have a system in which extracted gas is not recirculated or even to have a system in which gas is injected but not extracted. Such a system can of course only operate for a limited period of time but that time may be sufficiently long for certain applications and can be increased by increasing the volume of the inactive part of the chamber in which the laser cavity is defined or by providing an auxiliary chamber in fluid communication with the chamber defining the laser cavity. Also, of course, the laser may be used in a low pressure enviroment which may even be at a lower pressure than the pressure in the chamber.

Claims:

1.    A gas laser including a laser cavity and electrodes defining an electric discharge path in the cavity, wherein the electrodes include an anode having a porous surface and·gas supply means are provided for injecting gas into the cavity through the porous surface of the anode.

2.    A laser as claimed in claim 1 in which the effective surface of the anode is at its tip and exterior side walls of the anode are electrically insulated from the tip.

3.    A laser as claimed in claim 1 or 2 in which the effective surface of the anode is devoid of any edges, substantial bends or curvature.

4.    A laser as claimed in any preceding claim in which the anode is defined by a tubular member projecting into the chamber, the exterior of the tubular portion projecting into the chamber being electrically insulating but the tubular member having an electrically conducting porous end wall in the chamber.

5.    A laser as claimed in claim 4 in which the end wall is recessed within the tubular member, the walls of the recess apart from the end wall being electrically insulated.

6.    A laser as claimed in any preceding claim in which a plurality of said anodes are provided and the gas supply means are arranged to inject gas into the cavity through the porous surface of each said anode.

7.    A laser as claimed in any preceding claim in which at least one gas inlet is provided adjacent said anode and the gas supply means are arranged to inject gas into the cavity through the gas inlet.

8.    A laser as claimed in claim 6 or 7 in which a plurality of gas inlets are provided adjacent respective anodes and the gas supply means are arranged for injecting gas into the cavity through the gas inlets.

9. A laser as claimed in any preceding claim in which the gas supply means is mechanically separated from the laser and connected thereto by at least one gas conduit.

10. A laser as claimed in any preceding claim in which the optical path in the laser cavity is substantially aligned with the electric discharge path defined by the electrodes.

11. A high power gas laser including a laser head having a chamber providing a laser cavity and electrodes defining an electric discharge path in the chamber, power supply means for connection to the electrodes, and gas flow generation means for generating a gas flow through the laser cavity, wherein the gas flow generation means is mechanically separated from the laser head and connected thereto by at least one gas conduit.

12. A laser as claimed in claim 11 in which said at least one gas conduit is a flexible or articulated coupling permitting relative movement of the gas flow generation means and the laser head.

13. A gas laser including a laser cavity and an electric discharge path in the cavity defined by at least one anode and at least one cathode, wherein a gas inlet is provided adjacent said at least one anode and gas supply means are provided for injecting gas into the cavity through the gas inlet.

14. A laser as claimed in claim 13 in which said at least one anode is hollow and the gas supply means are arranged to inject gas into the cavity also through said at least one anode.

15. A method of operating a gas laser including a laser cavity and electrodes defining an electric discharge path in the cavity, wherein the electrodes include an anode having a porous surface and gas is injected into the cavity through the porous surface of the anode.

16.    A method of operating a gas laser including a laser cavity and an electric discharge path in the cavity defined by at least one anode and at least one cathode, wherein gas is injected into the cavity through a gas inlet adjacent said at least one anode.

17.    A method as claimed in claim 16 in which gas is also injected into the cavity through said at least one anode.

FIG. 1.

FIG. 2.

2/3

0180480

FIG.3.

FIG.4.

FIG.6.

0180480

FIG. 5.